# FASCICULE DE BREVET EUROPEEN

(11) **EP 1 745 183 B1**
(45) Date de publication et mention de la délivrance du brevet: **16.03.2011**
(21) Numéro de dépôt: 05762464.5
(22) Date de dépôt: 10.05.2005
(51) Int. Cl.: E04B 9/02

(54) **DISPOSITIF DE MAINTIEN D'UN FAUX PLAFOND OU FAUX PLANCHER**
STÜTZVORRICHTUNG FÜR DOPPELBÖDEN ODER SCHWEBEDECKEN
RAISED FLOOR- OR SUSPENDED CEILING-SUPPORT DEVICE

(30) Priorité: 11.05.2004 FR 0450907
(43) Date de publication de la demande: 24.01.2007
(73) Titulaire: Ruhlmann, René Philippe, 67370 Griesheim sur Souffel (FR)
(72) Inventeur: RUHLMANN, René, Philippe, F-67370 GRIESHEIM SUR SOUFFEL (FR); RUHLMANN, Marie, Jeanne, F-67370 GRIESHEIM SUR SOUFFEL (FR)
(74) Mandataire: Schmit, Christian Norbert Marie
(86) Numéro de dépôt international: PCT/FR2005/050308
(87) Numéro de publication internationale: WO 2005/113910

(56) Documents cités:
- EP-A- 0 421 405
- FR-A- 2 597 906
- US-A1- 2004 020 235

## Description

L'invention concerne un dispositif de maintien d'un faux plafond ou faux plancher sur un plafond, un sol ou des murs d'un local. Plus précisément, l'invention concerne un tel dispositif de maintien d'un faux plafond ou faux plancher permettant de ménager un espace entre les murs du local et le dispositif de fixation, de manière à autoriser un passage d'air entre un volume du local et un volume ménagé entre le plafond et le faux plafond, ou entre le sol et le faux plancher. L'invention concerne plus précisément des moyens permettant de maintenir un espace, ou écartement constant entre les murs et le dispositif de maintien du faux plafond ou faux plancher, de manière à avoir l'écart nécessaire à un écoulement d'air souhaité le long des murs. L'invention concerne un tel dispositif de maintien d'un faux plafond ou faux plancher muni de moyens permettant une fermeture variable de l'espace ménagé entre le mur et le dispositif de fixation.

La présente invention trouve tout particulièrement des applications dans le domaine de la climatisation ou de l'aération de locaux. En effet, les dispositifs d'aération, climatisation, filtration de l'air sont généralement disposés dans le volume créé entre le plafond et le faux plafond, l'air devant pouvoir s'écouler le long des murs. De même, il existe de plus en plus de système de chauffage et de climatisation de locaux par le sol, comportant des éléments logés entre le sol et un faux plancher.

Actuellement, pour permettre un passage d'air depuis le volume créé entre le plafond et le faux plafond d'un local, et inversement, il est connu d'utiliser une entretoise disposée entre les murs du local et le dispositif de maintien du faux plafond. Les entretoises sont disposées de manière régulière, afin d'assurer le maintien d'une distance constante entre le mur et le dispositif de maintien. Ces entretoises réservent ainsi un espace permettant la diffusion, sur la totalité de la périphérie du local, d'un air par exemple traité et/ou tempéré après son passage dans le volume ménagé entre le faux plafond et le plafond. Les entretoises sont fixées par exemple par l'intermédiaire de vis sur les murs ou sur le dispositif de maintien du faux plafond.

Lors de la pose d'un faux plafond dans un local, au moyen d'un dispositif de maintien de l'état de la technique tel que décrit précédemment, il est nécessaire de procéder en plusieurs étapes successives. Dans un premier temps, on fixe les entretoises de manière espacée sur les murs du local, à une hauteur spécifique par rapport au plafond, afin de créer le volume souhaité entre le faux plafond et le plafond. Afin que les entretoises soient toutes au même niveau, il est nécessaire d'apposer un repère visuel sur les murs, sur toute la périphérie du local, indiquant à quel niveau fixer les entretoises. Une fois les entretoises fixées, on amène le dispositif de maintien du faux plafond en butée contre ces entretoises, puis on procède à la fixation du dispositif de maintien du faux plafond sur le mur ou le plafond. Une fois le dispositif de maintien du faux plafond fixé au mur, ou au plafond, on amène le faux plafond qu'on solidarise au dispositif de maintien du faux plafond.

Dans le cas où les entretoises ne sont pas fixées au mur mais au dispositif de maintien du faux plafond, il faut, préalablement à la fixation du dispositif de maintien du faux plafond sur les murs ou le plafond, procéder à une fixation des entretoises sur le dispositif de maintien, de manière régulièrement espacée. On fixe ensuite le dispositif de maintien sur les murs ou le plafond du local.

Dans les deux cas, il est nécessaire de procéder en plusieurs étapes pour monter le faux plafond dans un local. Il s'ensuit une perte de temps importante et des risques de décalage des entretoises les unes par rapport aux autres, faisant qu'une distance entre les murs et le dispositif de maintien du faux plafond peut varier d'un point à un autre du local. En effet, la fixation du dispositif de maintien sur les murs ou le plafond est indépendante de l'entretoise et de son positionnement.

Il est connu de permettre une modulation du passage d'air en modifiant l'espace créé entre le dispositif de maintien du faux plafond et les murs, alors même que la distance entre le dispositif de maintien et les murs est fixée. En effet, il s'est avéré utile de pouvoir faire varier le passage d'air, non seulement dans l'ensemble du local, en fonction d'une température extérieure par exemple, mais également de pouvoir faire varier le passage d'air d'un point à un autre d'un même local. Par exemple, lorsque le soleil se réfléchit contre les fenêtres du local, il peut être utile d'avoir un débit d'air plus important à l'endroit du local où se situe les fenêtres qu'à un endroit du local dépourvu de fenêtres, afin qu'un flux d'air frais plus important arrive à l'endroit des fenêtres. A l'inverse, lorsque la température extérieure est faible, la présence de la fenêtre pouvant laisser filtrer de l'air froid depuis l'extérieur nécessite un passage d'air chaud plus important à l'endroit du local où les fenêtres sont situées qu'à un autre endroit dudit local.

Actuellement, les moyens permettant une fermeture variable de l'espace ménagé entre les murs et le dispositif de maintien d'un faux plafond sont souvent de réalisation complexe. Par ailleurs, ces pièces sont généralement solidaires du dispositif de maintien du faux plafond sur une face du dispositif de maintien dirigée vers le plafond. De tels moyens permettant une fermeture variable de l'espace ménagé entre les mur et le dispositif de maintien d'un faux plafond ne sont donc plus accessibles une fois le faux plafond posé. Pour accéder audits moyens, il est nécessaire de démonter préalablement, au moins partiellement, le faux plafond. US 2004 / 002235A1 (figure 7) décrit un dispositif de maintien selon le préambule de la revendication 1.

Dans le domaine des systèmes de chauffage et climatisation par le sol, on connaît notamment des systèmes comportant des caissons latéraux soufflant de l'air chaud ou froid selon les besoins. Les caissons sont disposés sur tout un périmètre du local, contre les murs, dans l'espace ménagé entre le faux plancher et les murs. Quand de l'air chaud est insufflé dans le local, l'air chaud ayant la propriété de monter, il peut être intéressant d'avoir un espace ménagé entre le faux plancher et les murs assez large afin que la diffusion de l'air chaud se fasse dans tout le volume du local. A l'inverse, lorsque de l'air froid est insufflé, un espace trop grand entre le faux plancher et les murs peut être pénalisant. En effet, l'air froid n'ayant pas la propriété de monter, mais au contraire de retomber, il reste au niveau du sol. L'ensemble du volume du local n'est alors pas fourni en air frais. Dans ce cas, il est donc au contraire avantageux d'avoir un espace réduit entre le faux plancher et les murs, de manière à ce que l'air froid soit projeté depuis le sol jusqu'au plafond et puisse, en retombant, rafraîchir l'ensemble du local. Bien souvent, un système permettant un bon chauffage d'un local par le sol donne des résultats insatisfaisants pour le refroidissement, et inversement.

Dans l'invention, on cherche à résoudre les problèmes énoncés ci-dessus en proposant un dispositif de maintien d'un faux plafond ou d'un faux plancher tel qu'une distance constante souhaitée entre les murs et le dispositif de maintien est obtenue grâce au dispositif de maintien lui-même. Pour cela, on munit des moyens de fixation du dispositif de maintien du faux plafond ou du faux plancher, sur un mur, un sol ou un plafond, de moyens permettant de maintenir l'espace constant souhaité entre le mur et le dispositif de maintien. On supprime ainsi une étape lors du montage du faux plafond ou faux plancher dans le local à munir dudit faux plafond ou faux plancher. En effet, lors de l'étape d'accrochage des moyens de fixation sur les murs, le sol ou le plafond on obtient dans un même temps la fixation du dispositif de maintien, aux murs, au sol ou au plafond, et la création et la conservation de la distance souhaitée entre le mur et le dispositif de maintien. La fixation du dispositif de maintien du faux plafond ou faux plancher est directement liée à un positionnement des moyens permettant un écartement constant entre les murs et le dispositif de maintien.

Les moyens de fixation et les moyens de maintien de l'écartement souhaité entre le mur et le dispositif de maintien du faux plafond ou faux plancher forment une seule et même pièce, ladite pièce étant avantageusement obtenue par moulage d'une pièce monobloc. Ainsi, il est possible de réaliser en grand nombre et de manière très rapide de telles pièces moulées monoblocs, toutes identiques. Lorsque les pièces utilisées pour la pose d'un faux plafond ou faux plancher dans un local proviennent d'un même moule, on est assuré que l'espace créé entre les murs et le dispositif de maintien est le même sur toute la périphérie du local.

Dans l'invention, on propose un dispositif de maintien d'un faux plafond ou faux plancher tel qu'un écartement constant sur toute la périphérie du local entre les murs et le dispositif de maintien du faux plafond ou faux plancher peut être fermé de manière modulable. Pour cela, le dispositif de maintien selon l'invention et selon la revendication 1 est muni d'une pluralité de volets, qui ont des longueurs de lames différentes, disposés, selon les besoins, le long d'un contour du dispositif de maintien dirigé vers les murs, de manière à obturer tout ou partie de l'espace ménagé entre le murs et le dispositif de maintien, et de moduler le débit d'air. De tels volets peuvent par exemple s'encliqueter de manière non irréversible sur le dispositif de maintien, afin qu'il soit possible de retirer tout ou partie desdits volets selon les besoins, et ce sans avoir à toucher à la structure même du faux plafond ou faux plancher.

Par ailleurs, il est possible de prévoir que ces volets puissent être montés coulissants sur le dispositif de maintien du faux plafond, afin de pouvoir être déplacés le long du dispositif de maintien.

L'invention a donc pour objet un dispositif de maintien d'un faux plafond ou faux plancher dans un local,

Dans des exemples de réalisation particuliers du dispositif de maintien du faux plafond ou faux plancher de l'invention, ledit dispositif peut comporter selon la revendication 1. des caractéristiques additionnelles selon les revendications 2 à 15.

L'invention sera mieux comprise à la lecture de la description qui suit et à l'examen des figures qui l'accompagnent. Celles-ci sont présentées à titre indicatif et nullement limitatif de l'invention. Les figures représentent :
- Figure 1 : une coupe dans un plan perpendiculaire à un mur d'un dispositif de maintien d'un faux plafond selon un exemple de réalisation de l'invention ;
- Figure 2 : une coupe dans un plan verticale perpendiculaire à un mur d'un dispositif de l'invention selon un autre exemple de réalisation de l'invention ;
- Figures 3a à 3d : des exemples d'une cale pour un dispositif selon l'invention ;
- Figure 4 : un exemple d'un volet amovible pour un dispositif selon l'invention ;
- Figure 5 : un second exemple d'un volet pour un dispositif selon l'invention;
- Figure 6 : une représentation schématique d'un profilé muni d'une cale et d'un volet pour un dispositif selon l'invention.
- Figure 7 : une coupe dans un plan verticale perpendiculaire à un mur d'un dispositif de l'invention selon un autre exemple de réalisation de l'invention ; Figures 1, 2 et 7 représentent des dispositifs selon l'invention pour autant que le dispositif comprend des volets ayant des longueurs de lames différentes.

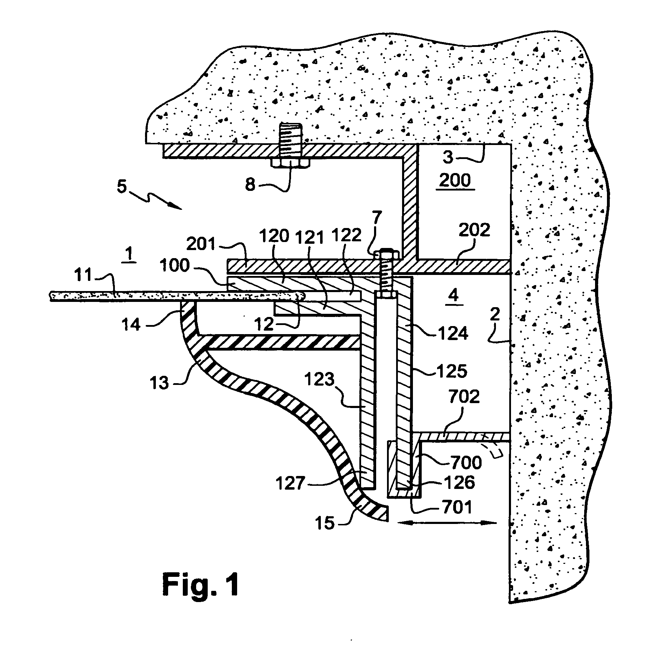

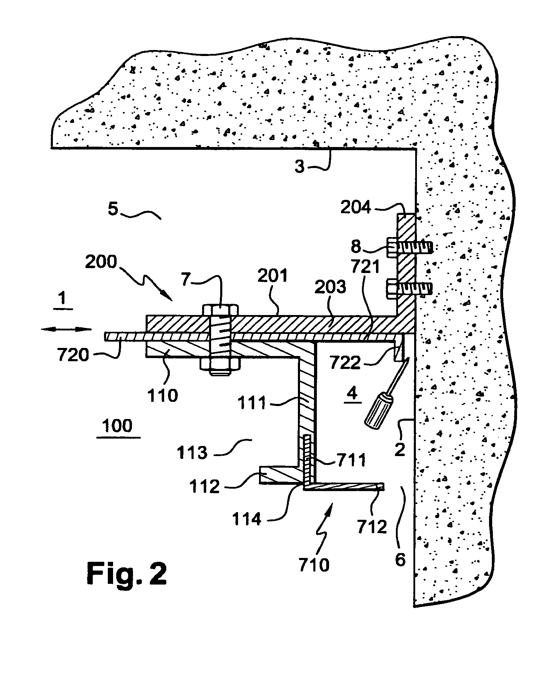

Sur la figure 1, on peut voir un exemple de réalisation d'un dispositif 1 de maintien d'un faux plafond sur un plafond 3 selon un premier exemple de réalisation de l'invention. Sur la figure 2, on peut voir un autre exemple de réalisation d'un dispositif de maintien 1 d'un faux plafond sur un mur 2.

En référence à ces dessins, le dispositif 1 selon l'invention comporte des moyens 202 de maintien d'un écartement constant entre un profilé de fixation 100 du dispositif de maintien 1 et le mur 2 du local dans lequel le faux plafond doit être disposé (un seul moyen 202 est visible sur la figure 1). Du fait de ces moyens 202 de maintien d'un écartement constant entre le profilé 100 et le mur 2, un espace 4 est ménagé entre le mur 2 et le profilé 100. Cet espace 4 permet un écoulement de l'air, depuis un espace 5 ménagé entre le faux plafond et le plafond 3 jusqu'à l'intérieur du local, et ce sur toute une périphérie dudit local.

Dans l'exemple représenté sur la figure 1, le profilé de fixation 100 a une forme générale en équerre. Le profilé 100 est muni d'une aile supérieure 120 et d'une aile inférieure 121 parallèles entre elles et au plafond 3. Un espace 122 est ménagé entre les deux ailes 120 et 121, apte à recevoir une extrémité 12 d'un faux plafond tendu 11. Le profilé 100 comporte également deux ailes latérales respectivement externe 123 et interne 124. Par aile interne 124, on entend l'aile latérale dirigée vers l'espace 4, par opposition à l'aile extérieure 123 qui est dirigée vers le local. Les ailes latérales 123 et 124 sont parallèles entre elles, perpendiculaires aux ailes supérieure 120 et inférieure 121 et s'étendent vers le bas, parallèlement au mur 2. Par s'étendre vers le bas, on entend s'étendre en direction du sol du local.

Dans un autre exemple de réalisation, il est possible de prévoir que le profilé est dépourvu de l'aile inférieure. Dans ce cas, il est possible de loger l'extrémité du faux plafond dans un espace ménagé entre les deux ailes latérales du profilé.

Une cale 200 comporte des moyens de fixation 201 du dispositif de maintien 1 sur le mur 2 et les moyens de maintien d'un écartement constant 202. Dans l'exemple représenté à la figure 1, la cale 200 monobloc a une forme générale en U. Différents exemples de la pièce monobloc seront étudiés par la suite.

Le volet 700 est solidaire d'une extrémité basse 126 d'une des ailes latérales 124. Par extrémité basse 126, on entend extrémité de l'aile latérale 124 dirigée vers le sol, en opposition à l'extrémité haute dirigée vers le plafond 3. Le volet 700 est encliqueté sur l'extrémité 126 par l'intermédiaire de moyens d'encliquetage 701. Une lame 702 du volet 700 s'étend en saillie par rapport à l'aile latérale 124, en direction du mur 2, de manière à obturer un passage de l'air à l'endroit de l'espace 4.

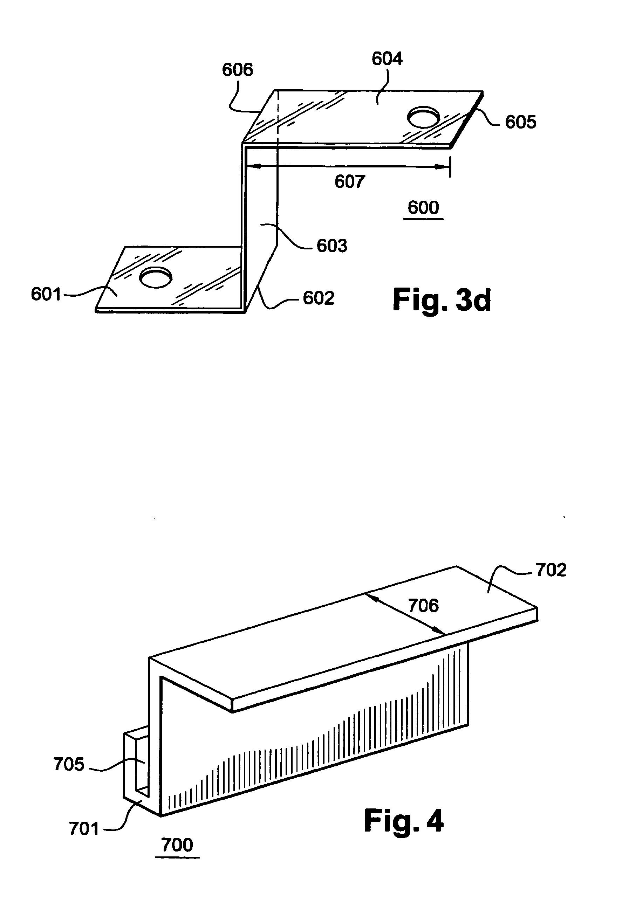

Dans l'exemple représenté à la figure 1, une longueur 706 (figure 4) du volet 702 permet d'obturer entièrement l'espace 5, de sorte qu'à l'endroit du profilé 100 où il y a des volets 700, l'air ne peut pas transiter depuis l'espace 5 ménagé entre le plafond 3 et le faux plafond 11 jusqu'à l'intérieur du local. Par longueur 706 de la lame 702, on entend la dimension de la lame 702 qui s'étend perpendiculairement au mur 2.

Dans d'autres exemples de réalisation, il est possible de munir le profilé 100 de volets 700 dont les lames 702 ont une longueur 706 telle qu'elle n'obstrue que partiellement le passage 4, afin par exemple de réduire seulement le débit d'air à l'endroit du profilé 100 où il y a ces volets 700.

Selon l'invention, le profilé 100 est au moins muni de volets 700 ayant des longueurs 706 de lames 702 différentes.

Des exemples de volets seront décrits plus en détail par la suite.

Sur la figure 1, l'aile latérale extérieure 123 porte une corniche, ou moulure 13. Une extrémité haute 14 de la corniche 13 vient en contact du faux plafond tendu 11. Par extrémité haute 13, on entend extrémité de la corniche 13 dirigée vers le faux plafond 11. Une extrémité basse 15 de la corniche 13, opposée à l'extrémité haute 14, vient en contact d'une extrémité basse 127 de l'aile latérale extérieure 123. La corniche 13 est fixée par tout moyen à l'aile latérale 123. Ainsi, on obtient une finition élégante de la pose du faux plafond 11, la corniche cachant le profilé 100 sur tout le périmètre du local.

Sur la figure 2, on peut voir un autre exemple de réalisation d'un dispositif 1 de maintien d'un faux plafond selon l'invention. Le profilé 100 est muni d'une aile supérieure 110 s'étendant parallèlement au plafond 3, d'une aile latérale 111 s'étendant parallèlement au mur 2 et sensiblement perpendiculairement à l'aile supérieure 110, et d'une aile inférieure 112 s'étendant sensiblement parallèlement au plafond 3 et à l'aile supérieure 110. Les ailes 110, 111 et 112 ménagent une cavité 113, dont une ouverture est dirigée vers l'intérieur du local. Dans cet espace 113 peut être logé un contour externe d'un faux plafond (non représenté).

La cale 200 comporte ici un dispositif de fixation 201, 203, 204 du profilé 100 du dispositif de maintien 1 dont une forme est telle qu'il permet d'une part de solidariser le profilé 100 au mur 2, et d'autre part de maintenir l'écart constant souhaité entre le profilé 100 et le mur 2. Cet exemple sera étudié plus en détail dans la suite de la description.

L'exemple de dispositif 1 est muni sur la figure 2 de deux exemples différents de volets. Bien évidemment, un seul volet est suffisant pour réguler le débit d'air à l'endroit d'un tronçon donné du profilé 100.

L'aile latérale 111 est munie d'une fente 114 dans laquelle est logée une zone d'accrochage 711 d'un volet 710 dont une lame 712, sensiblement perpendiculaire à la zone d'accrochage 711, s'étend en saillie de ladite zone d'accrochage 711, en direction du mur 2, de manière à réduire un passage 6 par lequel l'air contenu dans l'espace 5 ménagé entre le faux plafond et le plafond 3 peut s'écouler en direction du local.

Le dispositif 1 de fixation représenté à la figure 2 comporte un autre volet 720. Le volet 720 comporte une lame 721 et un crochet 722. La lame 721 comporte un orifice oblong de passage de vis (non visible sur la figure 2).

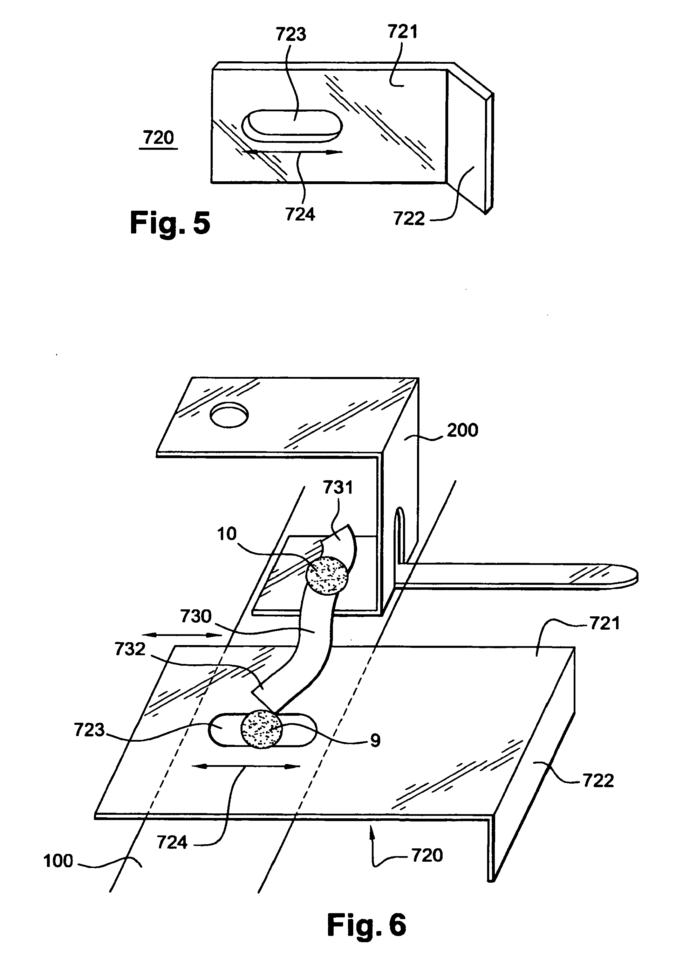

Le volet 720 est représenté en détail sur la figure 5. Le volet 720 peut être utilisé de différentes manières pour moduler l'espace ménagé entre le profilé et le mur.

Par exemple, sur la figure 2, le volet 720 est intercalé ente l'aile supérieure 110 du profilé 100 et la cale 200. L'orifice oblong du volet 720 coïncide avec l'orifice de la cale 200 et l'orifice du profilé 100. Une même vis 7 permet de fixer le profilé 100, le volet 720 et la cale 200. Cependant, le montage est tel qu'il existe un jeu suffisant entre le profilé 100 et le volet 720 d'une part et entre le volet 720 et la cale 200 d'autre part, pour que le volet 720 puisse être déplacé sur le profilé 100, en direction du mur 2 ou dans une direction opposée au mur 2. Lorsqu'on souhaite modifier la position du volet 720 sur le profilé 100, on tire ou repousse le volet 720 par son crochet 722. Une longueur 724 de l'orifice oblong 723 (figure 5) permet de faire varier l'espace entre le profilé 100 et le mur 2. Par longueur 724 de l'orifice oblong 723, on entend dimension de l'orifice 723 dans la direction perpendiculaire au mur 2.

Plus généralement, le volet 720 est monté coulissant sur l'aile 110 du profilé 100, de manière à pouvoir être déplacé dans une direction perpendiculaire au mur et moduler ainsi le passage d'air 6.

Dans les exemples représentés sur les figures 1 et 2, l'aile supérieure 120 ou 110 du profilé 100 est solidaire des moyens de fixation 201 par l'intermédiaire d'une vis et d'un écrous. Il est également possible de solidariser les ailes 120 ou 110 et les moyens de fixation 201 par collage, ou par soudure, ou par tout autre moyen connu approprié.

Dans l'invention, et comme cela est représenté sur les figures 1 et 2, les moyens de fixation 201 du profilé 100 au plafond 3 ou au mur 2 du local ainsi que les moyens 202 de maintien de l'écartement constant entre le profilé 100 et le mur 2 sont formés par une cale d'écartement monobloc 200.

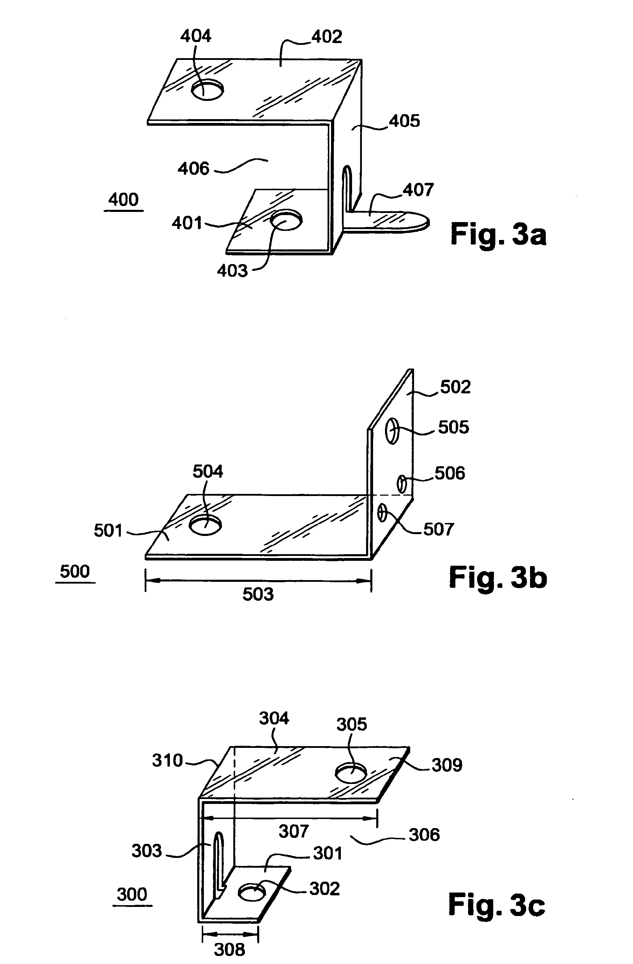

Sur les figures 3a, 3b, 3c et 3d, sont représentés quatre exemples différents d'une telle cale. Dans tous les cas, la cale comporte une butée s'étendant en saillie par rapport au profilé, en direction du mur, afin de former un moyen de maintien de l'écartement constant, la butée étant destinée à venir en appui contre le mur, et des moyens de fixation de la cale d'une part au profilé et d'autre part aux murs ou au plafond du local.

Sur la figure 3a est représenté un premier exemple d'une cale 400. La cale monobloc 400 a une forme générale en U. Une première branche 401 du U 400, ou branche inférieure, est destinée à être solidarisée à l'aile supérieure 120 ou 110 d'un profilé 100, par l'intermédiaire par exemple d'une vis passant par un orifice 403. Une deuxième branche 402 du U 400, sensiblement parallèle à la première branche 401, est destinée à être solidarisée au plafond 3, par l'intermédiaire d'une vis, par exemple, passant par un orifice 404. Une base 405 du U s'étend sensiblement perpendiculairement aux branches 401 et 402. Une cavité 406, ménagée entre la base 405 et les deux branches 401 et 402 du U 400, est destinée à être dirigée vers l'intérieur du local. Un ergot 407 s'étend en saillie de la branche inférieure 401, dans un prolongement de ladite branche 401, dans une direction opposée à la direction de la branche 401. L'ergot 407 est destiné à venir en butée contre le mur 2, de manière à former un moyen de maintien de l'écartement entre le profilé 100 et le mur 2 afin de créer l'espace 4. Il est également possible de réaliser une cale 400 dans laquelle l'ergot s'étend en saillie et dans le prolongement de la branche supérieure 402. La cale 400 permet donc bien d'une part de fixer le profilé, auquel elle est solidarisée, au plafond, et d'autre part de maintenir un espace constant entre le mur et ledit profilé.

Sur la figure 3b est représentée une cale 500 selon un autre exemple . La cale 500 a une forme générale en L. Un mât 501 du L 500 est destiné à s'étendre sensiblement parallèlement au plafond 3. Le mât 501 peut être solidarisé à l'aile supérieure 120 ou 110 du profilé 100 par l'intermédiaire d'une vis passant par un orifice 504 ménagé sur ledit mât 501. Une base 502 de la cale monobloc en L 500 s'étend perpendiculairement au mât 501, et est destinée à être solidarisée au mur 2. Une longueur 503 du mât 501 est telle que lorsque la base 502 est accolée au mur 2, un espace 4 est ménagé entre le profilé 100 et ledit mur 2. Pour cela, la longueur 503 du mât 501 est strictement supérieure à une largeur du profilé 100 auquel elle est solidarisée. Par largeur du profilé 100, on entend la dimension du profilé 100 perpendiculaire au mur 2. Le mât 501 est accolé audit profilé 100 sur toute la largeur dudit profilé 100 et s'étend en saillie dudit profilé 100 en direction du mur 2, comme cela est représenté sur la figure 2. La base 502 du L 500 peut être fixée au mur 200 par l'intermédiaire par exemple de trois vis passant respectivement par des orifices 505, 506 et 507 ménagés sur la branche 502. La multiplication du nombre de vis de fixation permet par exemple de contrecarrer un effet levier subi par la cale 500 en forme de L lorsque le faux plafond est maintenu par le dispositif de maintien 1.

Sur la figure 3c est représenté un troisième exemple de cale 300 . La cale 300 a une forme générale en U. Une première branche 301 du U 300, ou branche inférieure, est destinée à être solidarisée à une aile supérieure 120 ou 110 d'un profilé 100. Pour cela, un orifice 302 de passage de vis est ménagé sur la branche 301 du U. Une base du U 303 est destinée à s'étendre parallèlement au mur 2, et s'étend sensiblement perpendiculairement à la branche 301. Une seconde branche 304 du U 300 s'étend perpendiculairement à la base 303 et parallèlement à la première branche 301. La seconde branche 304, ou branche supérieure, est destinée à être solidarisée au plafond 3. Pour cela, on ménage un orifice 305 de passage de vis sur la branche supérieure 304. Une cavité 306 ménagée entre les branches 301 et 304 et la base 303 du U 300 est dirigée vers le mur 2. Une longueur 307 de la branche supérieure 304 du U 300 est strictement supérieure à une longueur 308 de la branche inférieure 301. Par longueur 307 ou 308 des branches 304 ou 301 du U 300, on entend la dimension des branches 301 ou 304 perpendiculaire au plan du mur du local concerné. Une extrémité 309 de la patte 304, opposée à l'extrémité 310 solidaire de la base 301, est destinée à venir en butée contre le mur du local. La patte 304 étant plus longue que la patte 301, on ménage ainsi un espace 4 (figures 1 et 2) entre le mur et le profilé 100, correspondant à la différence entre la longueur 307 de la patte 304 et la longueur 308 de la patte 301. La cale 300 permet donc d'une part de fixer le profilé, auquel elle est solidarisée, au plafond, et d'autre part de maintenir un espace constant entre le mur et ledit profilé.

Sur la figure 3d est représenté un quatrième exemple d'une cale 600. La cale 600 est munie de trois parties 601, 603 et 604. Une première partie 601, ou partie basse, s'étend sensiblement parallèlement à l'aile supérieure 120 ou 110 du profilé 100 à laquelle la partie basse 601 est destinée à être solidarisée. Une extrémité 602 de la partie basse 601, destinée à être dirigée vers le mur 2, est solidaire d'une partie intermédiaire 603 qui s'étend perpendiculairement à la partie basse 601. Une partie haute 604 s'étend parallèlement à la partie basse 601, mais dans une direction opposée à la direction de la partie basse 601. C'est-à-dire que la partie haute 604 est destinée à s'étendre en direction du mur 2. Une extrémité 605 de la partie haute 604, opposée à l'extrémité 606 solidaire de la partie intermédiaire 603, est destinée à venir en butée contre le mur 2. Ainsi, l'espace 4 entre le profilé 100 et le mur 2 est ménagé par l'intermédiaire de la partie haute 604, sur toute une longueur 607 de ladite partie haute 604. La cale 600 permet donc bien d'une part de fixer le profilé, auquel elle est solidarisée, au plafond, et d'autre part de maintenir un espace constant entre le mur et ledit profilé.

Une fois le profilé 100 disposé et maintenu à une distance constante du mur 2, de manière à ménager un espace 4 entre le profilé 100 et le mur 2, il peut être nécessaire de moduler un espace 6 (figure 2), par lequel l'air peut s'écouler le long du mur. Pour cela, le dispositif 1 de maintien du faux plafond est muni de plusieurs volets amovibles 700, 710, 720 tels que représentés notamment aux figures 4 et 5. Selon l'invention, ces volets amovibles ont des longueurs de lames différentes. De tels volets amovibles 700, 710, 720 peuvent être disposés sur toute une longueur du dispositif de maintien 1 d'un faux plafond, dans la mesure où un espace 4 entre le profilé 100 et le mur 2 existe.

Dans l'exemple représenté sur la figure 4, en association avec la description de la figure 1, on peut voir le volet 700 selon un exemple particulier. Le volet 700 comporte des moyens d'encliquetage 701 dudit volet 700 sur le profilé 100. Dans l'exemple représenté aux figures 1 et 4, les moyens d'encliquetage 701 sont formés par une fente 705 dans laquelle l'extrémité basse 126 de l'aile latérale 124 peut être logée. La fente 705 dans laquelle est logée l'extrémité basse 126 est telle que le volet 700 peut coulisser le long de l'extrémité basse 126 sur toute une longueur de l'aile latérale 124 et donc sur toute une longueur du profilé 100. Par longueur du profilé 100, on entend la dimension du profilé 100 parallèle au mur 2 et au plafond 3. Ainsi, il est possible, une fois le volet 700 encliqueté sur le profilé 100 de modifier une position du volet 700 le long du profilé 100. Par ailleurs, les moyens d'encliquetage 701 du volet 700 sont tels que le volet 700 peut être retiré et repositionné aisément sur le profilé 100.

La lame 702 du volet 700 s'étend en saillie d'une face intérieure 125 de l'aile latérale 124 du profilé 100 dirigée vers le mur 2, en direction du mur 2. Par face intérieure 125 de l'aile latérale 124, on entend face dirigée vers le mur 2. La lame 702 permet ainsi de moduler le passage par lequel l'air peut passer depuis l'espace 5 ménagé entre le plafond 3 et le faux plafond 11 jusqu'au local. La lame 702 peut être une lame souple (figure 1).

La longueur 706 de la lame 702 peut varier. Ainsi, selon la longueur 706 de la lame 702, il est possible d'obturer totalement ou partiellement l'espace 4. En effet, si la longueur 706 de la lame 702 est sensiblement équivalente à la longueur du moyen de maintien de l'écartement constant 202, l'espace 4 est complètement obturé. Par contre, on peut utiliser un volet 700 dont la longueur 706 de la lame 702, est inférieure à la longueur du moyen de maintien de l'écartement 202. Ainsi, on ne fait que réduire le passage 6 par lequel l'air peut s'écouler. Le dispositif selon l'invention comprend plusieurs volets ayant des longueurs de lames différentes.

Selon le nombre de volets 700 sur le profilé 100 et une distance entre chacun des volets 700, on peut modifier le débit d'air d'un endroit à l'autre d'un même local. De même, selon la longueur 706 des volets 700, on obstrue plus ou moins l'espace 4 et donc le passage 6 par lequel l'air peut s'écouler. Il est ainsi possible de réaliser une multitude de combinaison permettant d'obtenir le débit d'air souhaité, et de le modifier à volonté, par simple retrait ou déplacement des volets 700.

Sur la figure 5 est représenté un autre exemple d'un volet 720. Le volet 720 comporte une lame 721 et un crochet 722. La lame 721 comporte un orifice oblong 723 de passage de vis.

Le volet 720 représenté à la figure 5 peut être utilisé de différentes manières pour moduler l'espace ménagé entre le profilé et le mur.

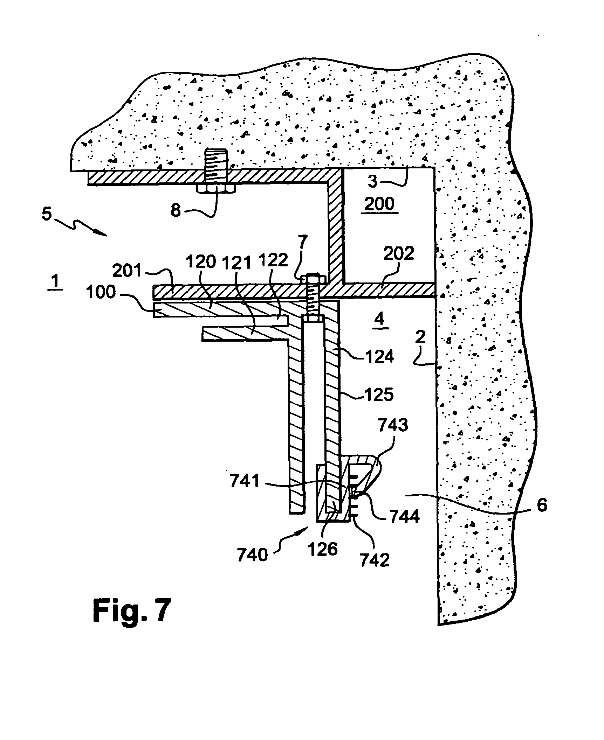

Sur la figure 6, le volet 720 est disposé sur le profilé 100, entre deux cales 200 (une seule visible sur la figure 7). La lame 721 est solidaire du profilé 100 par l'intermédiaire d'une vis 9. Une tige 730 comporte une première extrémité 731 fixée, par exemple par l'intermédiaire d'une vis 10 à la cale 200. Une seconde extrémité 732 de la tige 730 vient en appui contre la lame 721. La seconde extrémité 732 de la tige 730 permet de plaquer le volet 720 contre le profilé, de manière à ce que ledit volet 720 reste en position sur le profilé 100. Lorsqu'on souhaite modifier une distance entre le crochet 722 et le mur, de manière à modifier l'espace entre le profilé 100 et le mur, on tire ou repousse le crochet 722, de manière à avancer ou reculer la lame 721 sur le profilé 100, grâce à l'orifice oblong 723.

Dans un autre exemple de réalisation, on peut prévoir de remplacer la tige 730 par une vis à ressort permettant de fixer la lame 721 au profilé 100.

Selon un autre exemple de réalisation d'un dispositif de maintien d'un faux plafond de l'invention, il est possible de monter les volets 700, 710 ou 720 indirectement sur le profilé 100. Par exemple, le profilé 100, ou premier profilé, supporte un faux plafond, tel qu'un faux plafond suspendu, et un deuxième profilé (non représenté), monté sur le premier profilé ou sur le faux plafond, est muni des volets 700, 710 ou 720. Le deuxième profilé peut être disposé sur tout un contour extérieur du faux plafond, ou uniquement sur un contour extérieur partiel dudit faux plafond.

Dans l'exemple représenté à la figure 7, le profilé 100 est muni d'un autre exemple d'un volet 740 amovible.

Le volet 740 est encliqueté sur l'extrémité basse 126 d'une aile 125 du profilé 100, de manière similaire au volet 700 de l'exemple représenté aux figures 1 et 4.

La face intérieure 741 du volet 740, dirigée vers le mur 2 et s'étendant parallèlement audit mur 2, est munie d'une pluralité de redents 742, ou stries, formant des protubérances s'étendant perpendiculairement au mur 2. Les redents 742 sont disposés les uns en dessous des autres. Le nombre de redents 742 peut varier d'un volet 740 à un autre, de même que l'espacement entre deux redents 742 consécutifs, et leur longueur. Par longueur des redents 742, on entend la dimension desdits redents dans une direction perpendiculaire au mur 2. Sur un même volet 740, l'espacement entre les redents 742, et/ou la longueur des redents 742, peuvent être constants ou variables.

La lame 743 du volet 740 est souple et peut être partiellement repliée, de manière à ce que l'extrémité libre 744 de la lame 743 puisse être retenue par les redents 742. Selon que l'extrémité libre 744 de la lame 743 est retenue par un redent 742 supérieur ou un redent 742 inférieur, le passage 6 d'air est plus ou moins réduit. Par redent supérieur, on entend un redent situé au dessus d'un redent considéré, et par redent inférieur, on entend un redent situé au dessous du redent considéré. Par retenue, on entend que l'extrémité 744 de la lame 743 est maintenue en position au niveau du redent 742 considéré. Par exemple, un interstice est ménagé entre deux redents 742 consécutifs, ledit interstice étant apte à recevoir et maintenir l'extrémité libre 744 de la lame 743. Il est également possible de prévoir sur les redents 742 et sur l'extrémité libre 744 de la lame 743 des moyens de couplage mécanique permettant de fixer de manière non irréversible ladite extrémité 744 sur un redent 742 souhaité.

Le nombre de redents 742 peut varier selon les volets 740, et notamment selon la longueur de la lame 743. Plus le volet 740 comporte de redents 742, plus il est possible de jouer sur la largeur du passage 6 d'air ménagé entre le mur 2 et le faux plafond. Un volet 740 peut ainsi permettre d'obstruer complètement le passage 6, par exemple lorsque l'extrémité libre 744 de la lame 743 n'est pas retenue par les redents 742 et que la lame 743 s'étend en direction du mur 2. Ce même volet 740, lorsque la lame 743 est repliée, de manière par exemple à ce que l'extrémité libre 744 soit logée dans un interstice ménagé entre deux redents 742 consécutifs, permet de réduire la largeur du passage 6 d'air.

L'utilisateur peut aisément faire varier le passage 6 d'air, et donc le débit d'air, en modifiant la position de l'extrémité libre 744 de la lame 743 par rapport aux redents 742.

## Revendications

1. Dispositif (1) de maintien d'un faux plafond (11) ou faux plancher dans un local, comprenant
- un profilé (100) apte à supporter le faux plafond ou le faux plancher,
- des cales (200) d'écartement pour être disposées entre le profilé et des murs (2) du local, ménageant un espace (4) pour laisser diffuser de l'air, et un jeu de volets (700, 710, 720) amovibles, chaque volet comportant une lame (702, 721) lesdites lames s'étendant en saillie du profilé, en direction du mur lors de l'utilisation du dispositif lesdits volets étant montés sur le profilé et étant aptes à réduire ou obstruer l'espace ménagé entre le mur et le profilé, **caractérisé en ce que** les volets de ce jeu de volets ont des longueurs de lames différentes.

2. Dispositif selon la revendication 1, **caractérisé en ce qu'**au moins un volet est apte à s'engager élastiquement (701, 705) sur une rive (126) du profilé.

3. Dispositif selon l'une des revendications 1 à 2, **caractérisé en ce qu'**au moins un volet est apte à coulisser le long de ladite rive.

4. Dispositif selon l'une des 1 à 3, **caractérisé en ce qu'**au moins un volet peut être déplacé sur le profilé, dans une direction perpendiculaire au mur, de manière à moduler l'espace ménagé entre le mur et le profilé.

5. Dispositif selon la revendication 4, **caractérisé en ce qu'**une première extrémité du volet est munie d'un crochet (722), le volet pouvant être déplacé dans une direction perpendiculaire au mur au moyen dudit crochet.

6. Dispositif selon la revendication 5, **caractérisé en ce qu'**une seconde extrémité du volet, montée sur une aile (110, 120) du profilé, est munie d'un orifice oblong (723) de fixation, une vis (7, 9) traversant l'orifice oblong de fixation et l'aile du profilé.

7. Dispositif selon l'une des revendications 4 à 6, **caractérisé en ce qu'**il comporte un moyen de fixation (201) du profilé à un mur (2) du local, ledit moyen de fixation du profilé étant fixé à une aile (110, 720) du profilé, le volet étant intercalé entre l'aile du profilé et le moyen de fixation du profilé.

8. Dispositif selon l'une des revendications 4 à 7, **caractérisé en ce que** le volet est maintenu sur le profilé, une position du volet sur le profilé étant maintenue par une tige souple (730), une première extrémité (731) de la tige souple étant fixée au profilé et une seconde extrémité (732) de ladite tige souple venant en appui souple sur le volet.

9. Dispositif selon l'une des revendications 4 à 8, **caractérisé en ce que** le volet est fixé au profilé par une vis à ressort.

10. Dispositif selon l'une des revendications 1 à 9, **caractérisé en ce que** la lame est une lame souple.

11. Dispositif selon l'une des revendications 1 à 10, **caractérisé en ce qu'**il comporte une moulure (13) de rive fixée au profilé.

12. Dispositif selon l'une des revendications 1 à 11, **caractérisé en ce qu'**une cale comporte simultanément un moyen de fixation (7, 201) de la cale au profilé et un moyen de fixation (8, 202) de la cale directement à une paroi du local, de telle façon que la cale puisse tenir sur la paroi et que le profilé ne puisse pas tenir sur la paroi sans cale.

13. Dispositif selon la revendication 12, **caractérisé en ce qu'**une cale (500) a une forme générale en L, un mât (501) du L étant fixé à une aile supérieure (101, 110) du profilé et s'étendant parallèlement à ladite aile supérieure, et une base (502) du L s'étendant sensiblement parallèlement aux murs du local de manière à pouvoir être fixée à un mur (2) du local, le mât du L s'étendant en saillie de l'aile supérieure du profilé en direction du mur.

14. Dispositif selon l'une des revendications 12 à 13, **caractérisé en ce qu'**une cale (400) a une forme générale en U, une première branche (401) du U étant fixée à une aile supérieure (101, 110) du profilé de fixation et s'étendant parallèlement à ladite aile, une deuxième branche (402) du U étant apte à être fixée au plafond, une base (405) du U s'étendant parallèlement au mur en direction du plafond, les branches et la base du U ménageant une cavité (406) ouverte vers l'intérieur du local, la première branche du U comportant un ergot (407) s'étendant en saillie depuis l'aile supérieure du profilé, dans une direction opposée à la direction des branches du U, l'ergot étant destiné à venir en butée contre le mur.

15. Dispositif selon l'une des revendications 12 à 14, **caractérisé en ce qu'**une cale (300) a une forme générale en U, une première branche (301) du U étant solidaire d'une aile supérieure (101, 110) du profilé de fixation et s'étendant parallèlement à ladite aile, une base (303) du U s'étendant parallèlement au mur en direction du plafond et une deuxième branche (304) du U s'étendant parallèlement au plafond en direction du mur et étant apte à être fixée audit plafond, la deuxième branche du U étant destinée à venir en butée (309) contre le mur.

## Claims

1. Device (1) for holding a false ceiling (11) or a false floor in a room comprising
- a profile bar (100) able to support the false ceiling or the false floor,
- spacing wedges (200) to be arranged between the profile bar and walls (2) of the room, while providing a gap (4) enabling the air circulation, and
- a set of removable flaps (700, 710, 720), each flap comprising a blade (702, 721), said blades projecting from the profile bar towards the wall when using the device, said flaps being mounted on the profile bar and being able to reduce or close the gap between the wall and the profile bar,
**characterized in that** the flaps of the set of flaps have blades with various lengths.

2. Device according to claim 1, **characterized in that** at least one flap is able to be engaged elastically (701, 705) with an edge (126) of the profile bar.

3. Device according to any one of the claims 1 to 2, **characterized in that** at least one flap is able to slide along said edge.

4. Device according to any one of the claims 1 to 3, **characterised in that** at least one flap can be moved on the profile bar, in a direction perpendicular to the wall, in order to modify the gap between the wall and the profile bar.

5. Device according to claim 4, **characterized in that** a first end of the flap is provided with a hook (722), the flap being able to be moved in a direction perpendicular to the wall by means of said hook.

6. Device according to claim 5, **characterized in that** a second end of the flap, mounted on a flange (110, 120) of the profile bar, is provided with an oblong fixation orifice (723), a screw (7, 9) passing through the oblong fixation orifice and the profile flange.

7. Device according to any one the claims 4 to 6, **characterized in that** it comprises a means (201) for fixing the profile bar to a wall (2) of the premises, said means for fixing the profile bar being fixed to a flange (110, 720) of the profile bar, the flap being inserted between the flange of the profile bar and the means for fixing the profile bar.

8. Device according to any one of the claims 4 to 7, **characterized in that** the flap is hold on the profile bar, a position of the flap on the profile bar being determined by a flexible rod (730), a first end (731) of the flexible rod being fixed to the profile bar and a second end (732) of said flexible rod being flexibly supported by the flap.

9. Device according to any one of the claims 4 to 8, **characterized in that** the flap is fixed to the profile bar by means of a spring screw.

10. Device according to any one of the claims 1 to 9, **characterized in that** the blade is a flexible blade.

11. Device according to any one of the claims 1 to 10, **characterized in that** it comprises an edge moulding (13) fixed to the profile bar.

12. Device according to any one of the claims 1 to 11, **characterized in that** a wedge comprises simultaneously a means (7, 201) for fixing the wedge to the profile bar and a means (8, 202) for fixing the wedge directly to a wall of the premises, in order that the wedge can be hold on the profile bar and the profile bar cannot be hold on the wall without any wedge.

13. Device according to claim 12, **characterized in that** a wedge (500) is composed of a L-bar, the longer flange (501) of the L-bar being fixed to an upper flange (101, 110) of the profile bar and extending parallel to said upper flange, and the shorter flange (502) of the L-bar extending substantially parallel to the walls of the premises in order to be fixed to a wall (2) of the premises, the longer flange of the L-bar projecting from the upper flange of the profile bar towards the wall.

14. Device according to any one of the claims 12 to 13, **characterized in that** a wedge (400) is formed by a U-bar, a first flange (401) of the U-bar being fixed to an upper flange (101, 110) of the fixation profile bar and extending parallel to said flange, a second flange (402) of the U-bar being able to be fixed to the ceiling, a web (405) of the U-bar extending parallel to the wall towards the ceiling, the flanges and the web of the U-bar forming a cavity (406) opened towards the inside of the premises, the first flange of the U-bar comprising a pin (407) projecting from the upper flange of the profile bar, in the opposite direction to the direction the flanges of the U-bar, the pin being intended to abut against the wall.

15. Device according to any one of the claims 12 to 14, **characterized in that** a wedge (300) is formed by a U-bar, the first flange (301) of the U-bar being integral with an upper flange (101, 110) of the fixation profile bar and extending parallel to said flange, a web (303) of the U-bar extending parallel to the wall towards the ceiling and a second flange (304) of the U-bar extending parallel to the ceiling towards the wall and being able to be fixed to said ceiling, the second flange of the U-bar being intended to abut (309) against the wall.

## Patentansprüche

1. Vorrichtung (1) zum Festhalten einer eingeschobenen Decke (11) oder einer Zwischendecke in einem Raum, umfassend
- einen Profilträger (100), geeignet für die Abstützung der eingeschobenen Decke oder der Zwischendecke,
- Trennkeile (200), die zwischen dem Profilträger und Raumwänden (2) mit einem Zwischenraum (4) für den Luftdurchfluss angeordnet sind, und
- einen lösbaren Klappensatz (700, 710, 720), wobei jede Klappe ein Plättchen (702, 721) aufweist, wobei bei Verwendung der Vorrichtung die genannten Plättchen vom Profilträger in Richtung auf die Wand vorstehend sich erstrecken, wobei die genannte Klappen am Profilträger angebaut, und für das Reduzieren oder Verstopfen des Zwischenraums zwischen dem Profilträger und der Wand geeignet sind, **dadurch gekennzeichnet, dass** die Klappen dieses Klappensatzes verschiedene Plättchenlängen aufweisen.

2. Vorrichtung nach Anspruch 1, **dadurch gekennzeichnet, dass** mindestens eine Klappe für den elastischen Eingriff (701, 705) mit einer Kante (126) des Profilträgers geeignet ist.

3. Vorrichtung nach einem der Ansprüche 1 bis 2, **dadurch gekennzeichnet, dass** mindestens eine Klappe für das Gleiten an der genannten Kanten entlang geeignet ist.

4. Vorrichtung nach einem der Ansprüche 1 bis 3, **dadurch gekennzeichnet, dass** mindestens ein Klappe am Profilträger in einer zur Wand senkrechten Richtung bewegbar ist, um den Zwischenraum zwischen der Wand und dem Profilträger verändern.

5. Vorrichtung nach Anspruch 4, **dadurch gekennzeichnet, dass** ein erstes Ende der Klappe mit einem Haken (722) vorgesehen ist, wobei die Klappe in einer zur Wand senkrechten Richtung mittels des genannten Hakens bewegbar ist.

6. Vorrichtung nach Anspruch 5, **dadurch gekennzeichnet, dass** ein zweites Ende der Klappe, welches an einem Flansch (110, 120) des Profilträgers angebaut ist, mit einer länglichen Befestigungsöffnung (723) vorgesehen ist, wobei sich eine Schraube (7, 9) durch die längliche Befestigungsöffnung und den Profilflansch erstreckt.

7. Vorrichtung nach einem der Ansprüche 4 bis 6, **dadurch gekennzeichnet, dass** sie ein Befestigungsmittel (201) zum Befestigen des Profilträgers an einer Raumwand (2) umfasst, wobei das genannte Profilträger-Befestigungsmittel an einem Flansch (110, 720) des Profilträgers befestigt ist, wobei die Klappe zwischen dem Flansch des Profilträgers und dem Profilträger-Befestigungsmittel eingelegt ist.

8. Vorrichtung nach einem der Ansprüche 4 bis 7, **dadurch gekennzeichnet, dass** die Klappe am Profilträger festgehalten ist, wobei eine Stellung der Klappen am Profilträger durch einen flexiblen Schaft (730) bestimmt wird, wobei ein erstes Ende (731) des flexiblen Schaftes am Profilträger befestigt ist, und ein zweites Ende (732) des genannten flexiblen Schaftes zur Anlage an der Klappe kommt.

9. Vorrichtung nach einem der Ansprüche 4 bis 8, **dadurch gekennzeichnet, dass** die Klappe am Profilträger durch eine Federschraube befestigt wird.

10. Vorrichtung nach einem der Ansprüche 1 bis 9, **dadurch gekennzeichnet, dass** das Plättchen ein flexible Plättchen ist.

11. Vorrichtung nach einem der Ansprüche 1 bis 10, **dadurch gekennzeichnet, dass** sie eine Kantenformleiste (13) umfasst, die am Profilträger befestigt ist.

12. Vorrichtung nach einem der Ansprüche 1 bis 11, **dadurch gekennzeichnet, dass** ein Keil zugleich ein Befestigungsmittel (7, 201) zum Befestigen des Keils am Profilträger und ein Befestigungsmittel (8, 202) zum Befestigen des Keils unmittelbar an einer Raumwand umfasst, so dass der Keil an der Wand festgehalten ist, und das Profilträger an der Wand nicht keillos festgehalten werden kann.

13. Vorrichtung nach Anspruch 12, **dadurch gekennzeichnet, dass** ein Keil (500) aus einem L-Profil besteht ist, wobei der längere Flansch (501) des L-Profils an einem Oberflansch (101, 110) des Profilträgers befestigt ist, und parallel zum genannten Oberflansch sich erstreckt, und wobei sich der Basisflansch (502) des L-Profils wesentlich parallel zu den Raumwänden für seiner Befestigung an einer Raumwand (2) erstreckt, wobei sich der längere Flansch des L-Profils vom Oberflansch des Profilträgers in Richtung auf die Wand vorstehend erstreckt.

14. Vorrichtung nach einem der Ansprüche 12 bis 13, **dadurch gekennzeichnet, dass** ein Keil (400) aus einem U-Profil besteht ist, wobei ein erster Flansch (401) des U-Profils an einem Oberflansch (101, 110) des Befestigungsprofilträgers befestigt ist, und parallel zum genannten Oberflansch sich erstreckt, ein zweiter Flansch (402) des U-Profils für die Befestigung an der Decke geeignet ist, und wobei sich ein Basissteg (405) des U-Profils parallel zur Wand in Richtung auf die Decke erstreckt, wobei die Flansche und der Basissteg des U-Profils einen nach dem Rauminnere offenen Hohlraum (406) ausbilden, wobei der erste Flansch des U-Profils einen Nocken (407) umfasst, der vom Oberflansch des Profilträgers in einer Entgegenrichtung zur Richtung der U-Profilflansche sich vorstehend erstreckt, wobei der Nocken an die Wand anschlagen soll.

15. Vorrichtung nach einem der Ansprüche 12 bis 14, **dadurch gekennzeichnet, dass** ein Keil (300) aus einem U-Profil besteht ist, wobei ein erster Flansch (301) des U-Profils aus einem Stück mit einem Oberflansch (101, 110) des Befestigungsprofilträgers ausgebildet ist, und parallel zum genannten Oberflansch sich erstreckt, wobei sich ein Basissteg (303) des U-Profils parallel zur Wand in Richtung auf die Decke erstreckt, und wobei ein zweiter Flansch (304) des U-Profils parallel zur Decke in Richtung auf die Wand sich erstreckt und für seine Befestigung an der genannten Decke geeignet ist, wobei der zweite U-Profilflansch an die Wand anschlagen soll.
